# FASCICULE DE BREVET EUROPEEN

(11) **EP 3 028 939 B1**
(45) Date de publication et mention de la délivrance du brevet: **11.10.2017**
(21) Numéro de dépôt: 15197919.2
(22) Date de dépôt: 04.12.2015
(51) Int. Cl.: B63J 4/00, B05B 1/20, B05B 1/26, B01D 53/50, B63H 21/34, F01N 13/12

(54) **DISPOSITIF D'ÉJECTION D'EFFLUENTS LIQUIDES POUR UN NAVIRE MARIN, AINSI QU'INSTALLATION CORRESPONDANTE D'ÉPURATION DES GAZ D'ÉCHAPPEMENT D'UN MOTEUR D'UN NAVIRE MARIN**
VORRICHTUNG ZUM AUSSTOSS VON FLÜSSIGEN ABWÄSSERN FÜR EIN SCHIFF, SOWIE ENTSPRECHENDE ABGASREINIGUNGSANLAGE EINES SCHIFFSMOTORS
DEVICE FOR EJECTING LIQUID EFFLUENTS FOR A MARINE VESSEL, AND CORRESPONDING INSTALLATION FOR PURIFYING EXHAUST GASES FROM AN ENGINE OF A MARINE VESSEL

(30) Priorité: 05.12.2014 FR 1461971
(43) Date de publication de la demande: 08.06.2016
(73) Titulaire: LAB SA, 69007 Lyon (FR)
(72) Inventeur: SIRET, Bernard, 69200 VENISSIEUX (FR); TABARIES, Frank, 83430 SAINT MANDRIER SUR MER (FR)
(74) Mandataire: Lavoix

(56) Documents cités:
- WO-A1-2014/128261
- GB-A- 2 469 320
- KR-A- 20030 072 864
- US-A- 3 590 887

## Description

La présente invention concerne une installation d'épuration des gaz d'échappement d'un moteur d'un navire marin.

Les navires marins, que ce soient des paquebots ou d'autres navires, utilisent comme carburant pour leur moteur diesel surtout du fioul. Ce fioul contient jusqu'à 5 % en masse de soufre, le plus souvent entre 0,5 et 3,5 % en masse. Lors du processus de combustion dans les moteurs, ce soufre est transformé en dioxyde de soufre (SO₂), qui est un gaz acide.

Les réglementations maritimes en vigueur obligent à limiter le rejet par la cheminée des navires à un équivalent de 0,5 % en masse de soufre dans le fioul alimentant les moteurs des navires. Toutefois, la valeur limite de rejet dépend de la zone de navigation : près des côtes ou bien au port, les émissions de dioxyde de soufre doivent être moindres qu'en pleine mer. Il faut noter que, même au port, un paquebot, par exemple de croisière, doit continuer à faire fonctionner son moteur pour subvenir aux besoins en électricité à bord et donc, potentiellement, émet du dioxyde de soufre.

Pour se conformer aux réglementations précitées, il est donc nécessaire que les navires marins emploient des moyens pour réduire leur émission de dioxyde de soufre. Plusieurs solutions sont envisageables, mais pour des raisons économiques, les laveurs humides de désulfuration, utilisant de l'eau de mer, seule ou avec un réactif complémentaire alcalin, constituent la solution privilégiée. WO 2014/128261 en fournit un exemple. Ces laveurs à l'eau de mer, qui mettent à profit l'alcalinité naturelle de l'eau de mer, génèrent des effluents fortement acides dont le pH peut être aussi bas que 2 en l'absence d'une dilution complémentaire. Or, les réglementations en vigueur imposent que le pH, à une distance de quelques mètres du navire, soit supérieur ou égal à 6,5, même lorsque le navire est à l'arrêt. Pour se conformer à cette exigence, on peut réaliser une dilution avant rejet, en mélangeant de l'eau de mer, qui doit être pompée, aux effluents avant leur rejet hors du navire. Toutefois, l'alcalinité de l'eau de mer étant assez faible, en valant typiquement 1000 à 2500 µ équivalents d'alcalinité par litre, selon la localisation géographique, il faut de grandes quantités d'eau de mer, dont le pompage induit un coût énergétique élevé. Par ailleurs, quand le navire est à l'arrêt, il n'y a pas de renouvellement de l'eau autour du navire de sorte que, dans cette eau, il n'y a pas de diffusion naturelle des effluents rejetés, à la différence du cas où le navire navigue en pleine mer. Aussi, quand le navire est à l'arrêt, le milieu autour de la zone de rejet des effluents s'acidifie rapidement au-delà des valeurs tolérables.

Précisément dans ce contexte, GB 2 469 320, sur lequel est basé le préambule de la revendication 1, a proposé un dispositif d'éjection des effluents pour un navire, comprenant un conduit creux, qui est alimenté par les effluents d'un laveur de désulfuration et dont l'extrémité libre est conformée pour favoriser le mélange des effluents évacués avec l'eau de mer environnante. Cette conformation de l'extrémité libre du conduit d'évacuation passe par une réduction de section ou bien l'intégration de déflecteurs internes ou encore la présence d'un orifice annulaire.

Dans un domaine plus lointain, KR 2003 0072864 divulgue une installation complexe pour évacuer au large des effluents liquides provenant d'une unité à terre. Cette installation comprend une conduite principale sous-marine se terminant par une branche transversale qui est surmontée de plusieurs chapeaux tubulaires. Chaque chapeau est, à son sommet, pourvu de quatre orifices d'évacuation dont les normales aux plans respectifs sont toutes orientées radialement à l'axe central du chapeau. Chacun de ces orifices est intérieurement spiralé, a priori pour impulser un écoulement rotatif aux effluents évacués.

Le but de la présente invention est de proposer un nouveau dispositif d'éjection des effluents pour un navire, qui soit simple, économique et efficace, en permettant notamment de rejeter à la mer des effluents acides en conformité avec la réglementation.

A cet effet, l'invention a pour objet une installation d'épuration des gaz d'échappement d'un moteur d'un navire marin, telle que définie à la revendication 1.

Une des idées à la base de l'invention est de faire en sorte que, en sortie du dispositif d'éjection appartenant à l'installation d'épuration, des jets d'effluents se forment et soient convenablement orientés de manière à assurer un effet d'entrainement de l'eau de mer dans laquelle ce dispositif d'injection est immergé en service. On crée ainsi un effet de pompe dynamique, autrement appelé effet « jet pump » correspondant à l'expression anglaise consacrée, effet selon lequel chaque jet entraine, par transfert de mouvement, les liquides environnants, ce qui produit globalement un mouvement de l'eau de mer dans la direction moyenne où pointe le jet. Pour ce faire, les effluents du navire, à rejeter à la mer, sont canalisés dans un corps creux du dispositif d'éjection de l'installation conforme à l'invention et en sortent sous pression, sous forme de cinq jets, par autant d'orifices d'évacuation qui sont agencés de manière que les directions respectives des jets, autrement dit les normales aux plans respectifs de ces orifices, soient à la fois en éventail dans un plan horizontal par rapport au navire portant le dispositif et tournées vers le bas. Plus précisément, les inventeurs ont caractérisé géométriquement la forme en éventail par la divergence relative des normales aux plans respectifs des cinq orifices, ainsi que par les angles que ces normales forment, en projection dans un plan horizontal, avec un plan médian du corps creux du dispositif, à la fois vertical et antéropostérieur par rapport au navire portant ce corps creux, ces angles étant sensiblement nul pour l'orifice médian, compris entre 30° et 45° pour les deux orifices les plus éloignés du plan médian, et compris entre 15° et 25° pour les deux orifices restants. Quant à l'orientation vers le bas des normales aux plans respectifs des orifices, les inventeurs l'ont caractérisée géométriquement par l'angle que ces normales forment, en projection dans le plan médian, avec l'horizontale, cet angle étant compris entre 10° et 25°. Sous l'action des jets d'effluents sortant des orifices du dispositif d'éjection de l'invention, de l'eau de mer fraîche est aspirée, tandis que les effluents rejetés sont, avec cette eau de mer aspirée, éjectés vers l'arrière du navire et vers le fond de la mer. Ainsi, selon l'invention, on évite une stagnation ou une quasi-stagnation de l'eau autour du navire, ce qui est particulièrement à craindre quand le navire est à l'arrêt, par exemple au port. L'installation selon l'invention est ainsi conçue pour être embarquée sur un navire marin pour en désulfurer les émissions gazeuses, tout en permettant de rejeter les effluents acides en résultant de manière économique et efficace, ainsi que dans le respect des réglementations en vigueur relatives au pH de l'eau de mer autour du navire.

Des caractéristiques additionnelles avantageuses de l'installation d'épuration conforme à l'invention sont spécifiées aux revendications 2 à 9.

L'invention sera mieux comprise à la lecture de la description qui va suivre, donnée uniquement à titre d'exemple et faite en se référant aux dessins sur lesquels :
- la figure 1 est une vue schématique en élévation d'un navire marin embarquant une installation de traitement des gaz d'échappement de son moteur, conforme à l'invention ;
- la figure 2 est une vue à plus grande échelle du détail cerclé II à la figure 1, montrant seul un dispositif d'éjection de l'installation ;
- la figure 3 est une vue selon les flèches III des figures 1 et 2 du dispositif d'éjection, montré seul ; et
- la figure 4 est une section selon ligne IV-IV de la figure 1.

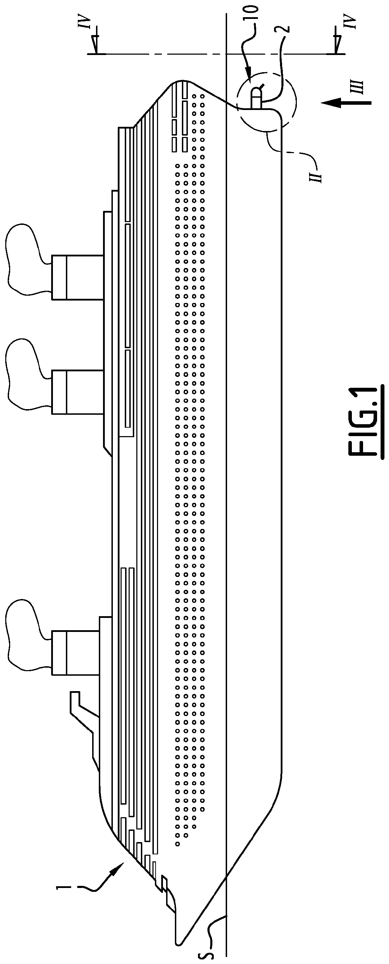

Sur la figure 1 est représenté un navire marin 1 de type paquebot de croisière. Bien entendu, l'invention n'est pas limitée à ce type d'embarcation, mais s'applique plus généralement à tous les navires marins du moment que ces derniers sont propulsés par des moteurs, notamment des moteurs diesel.

Afin de limiter les rejets de dioxyde de soufre contenu dans les gaz d'échappement du moteur du navire 1, ce dernier embarque une installation d'épuration de ces gaz. Cette installation d'épuration inclut, entre autres, un laveur de désulfuration, non représenté sur les figures : ce laveur, qui est connu en soi, est conçu pour capter le dioxyde de soufre contenu dans les gaz d'échappement, en utilisant de l'eau de mer, éventuellement diluée et/ou mélangée avec un réactif complémentaire alcalin. Les effluents de ce laveur, c'est-à-dire les eaux ayant capté le dioxyde de soufre lors de leur passage dans la partie active du laveur après avoir été distribuées au laveur, sont très acides, avec un pH normalement compris entre 2 et 4, le plus souvent compris entre 2 et 3. En pratique, les effluents liquides admis à l'éjecteur 10 proviennent soit directement du laveur de désulfuration précité, soit d'autres équipements de l'installation d'épuration, interposés entre le laveur de désulfuration et l'éjecteur. Autrement dit, les effluents admis à l'éjecteur proviennent directement ou indirectement du laveur de désulfuration.

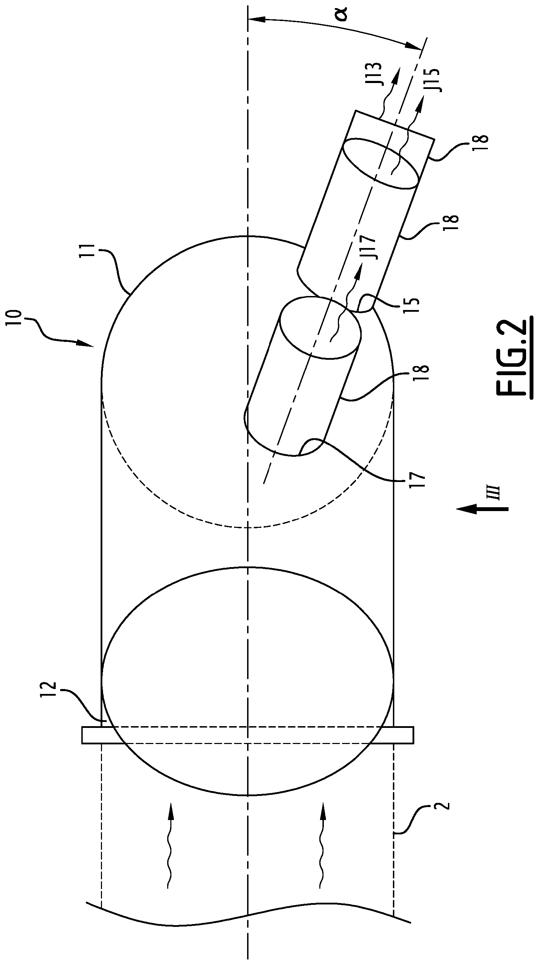

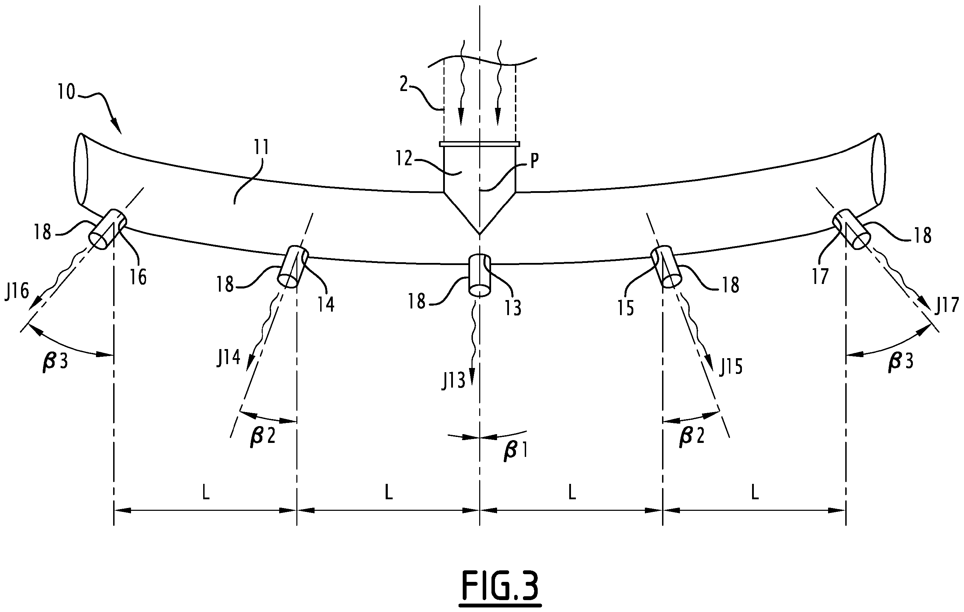

L'installation d'épuration inclut également un dispositif 10 d'éjection des effluents provenant du laveur de désulfuration, ce dispositif étant également appelé par la suite éjecteur. L'éjecteur 10, montré de manière schématique sur la figure 1, est représenté en détail sur les figures 2 et 3.

Comme montré sur la figure 1, l'éjecteur 10 est conçu pour être solidarisé au navire 1, en étant immergé conjointement avec une partie du navire située sous la surface libre S de la mer. Bien entendu, l'agencement et les proportions relatives de l'éjecteur 10 par rapport au navire 1, tels que montrés à la figure 1, ne sont qu'illustratifs et ne sont pas limitatifs de l'invention.

Comme bien visible sur les figures 2 et 3, l'éjecteur 10 comprend un corps principal 11, qui est creux et qui est globalement allongé, en s'étendant de part et d'autre d'un plan médian P qui, lorsque l'éjecteur est en service, c'est-à-dire lorsque l'éjecteur est porté solidairement par le navire 1, est à la fois vertical et antéropostérieur par rapport au navire 1. On notera que, dans le présent document, les termes « antéropostérieur », « vertical », « horizontal » et similaires s'entendent, par commodité, par rapport au navire 1. Ainsi, une direction antéropostérieure correspond à la direction reliant l'avant et l'arrière du navire 1, autrement dit reliant sa proue et sa poupe. De même, une direction verticale correspond à la direction perpendiculaire, à la fois, à la direction antéropostérieure et à la surface libre S de la mer, considérée calme, sur laquelle flotte le navire 1. Et une direction horizontale correspond à une perpendiculaire à la direction verticale précitée. En pratique, le plan médian P de l'éjecteur 10 ne correspond pas nécessairement à un plan médian du navire 1 et peut être plus ou moins décalé par rapport à un tel plan médian du navire.

Le corps principal 11 de l'éjecteur 10 est percé d'une embouchure d'admission 12 dans laquelle débouche une canalisation 2 qui délivre les effluents en provenance du laveur de désulfuration. La forme de réalisation de cette embouchure 12 n'est pas limitative de l'invention. D'ailleurs, à titre de variante non représentée, plusieurs embouchures peuvent être prévues afin de raccorder le corps principal 11 à autant de canalisations délivrant les effluents.

Selon l'invention, le corps principal 11 de l'éjecteur 10 est percé de cinq orifices d'évacuation 13, 14, 15, 16 et 17. Par définition d'un dispositif d'éjection tel que l'éjecteur 10, on comprend que la somme des sections de passage de ces cinq orifices est strictement inférieure à la section de passage de l'embouchure 12: les effluents alimentant le corps 11 via l'embouchure 12 sortent sous pression du corps 11 via les orifices 13 à 17, en formant des jets respectifs J13, J14, J15, J16 et J17. Suivant une forme de réalisation avantageuse, qui permet de renforcer une répartition uniforme des effluents entre les orifices 13 à 17, le corps 11 présente un diamètre interne qui est égal ou supérieur à 2,5 fois le diamètre des orifices 13 à 17.

Les orifices 13 à 17 sont disposés le long du corps principal 11 de l'éjecteur 10, en étant répartis de part et d'autre du plan médian P. Dans l'exemple de réalisation considéré sur les figures, le plan médian P passe par l'orifice 13 tandis que les orifices 14 et 15 sont symétriques l'un de l'autre par rapport au plan P et les orifices 16 et 17 sont symétriques l'un de l'autre par rapport à ce plan P.

Les inventeurs ont établi que les jets J13 à J17 doivent être orientés les uns par rapport aux autres de telle sorte que, dans un plan horizontal, ces jets forment un éventail s'évasant vers l'arrière. Autrement dit, les normales aux plans respectifs des orifices 13 à 17, qui définissent les directions d'éjection des jets J13 à J17, s'écartent les unes des autres dans un plan horizontal en direction de l'arrière du navire 1. Plus précisément, la normale aux plans respectifs des orifices 16 et 17 forme, en projection dans un plan horizontal, un angle β3 par rapport au plan médian P, qui est compris entre 30° et 45°. De plus, la normale aux plans respectifs des orifices 14 et 15 forme, en projection dans un plan horizontal, un angle β2 par rapport au plan médian P, qui est compris entre 15° et 25°. Et la normale au plan de l'orifice 13 s'étend sensiblement dans le plan médian P, ce qui revient à dire que cette normale forme, en projection dans un plan horizontal, un angle β1 par rapport au plan P, qui est sensiblement nul. Cette disposition géométrique en éventail assure une indépendance de chaque jet par rapport aux autres jets, tout en conservant un effet important de pompe dynamique, en forçant vers l'arrière conjointement les effluents éjectés sous la forme des jets J13 à J17 et l'eau de mer fraîche qui est aspirée sous l'action de ces jets.

Dans le prolongement des considérations qui précèdent, une disposition géométrique, optionnelle mais avantageuse, consiste à ce que la distance horizontale, séparant deux à deux les orifices 13 à 17 et marquée L sur la figure 3, est comprise entre 400 et 800 mm.

Les inventeurs ont également établi que les jets J13 à J17 doivent être orientés vers le bas, c'est-à-dire vers le fond de la mer. Plus précisément, la normale aux plans respectifs des orifices 13 à 17 est dirigée en direction du bas vers l'arrière, en formant, en projection dans le plan médian P, un angle α par rapport à l'horizontale qui est compris entre 10° et 25°. Cette disposition assure que la surface libre S de la mer reste peu impactée par les jets J13 à J17.

Selon une autre caractéristique de l'invention, visant à renforcer la formation et l'effet des jets J13 à J17, les orifices 13 à 17 présentent une taille sensiblement identique, qui est calculée de manière telle que la vitesse d'éjection des effluents au niveau de ces orifices soit comprise entre 12 et 20 m/s.

Selon une forme de réalisation préférentielle, qui est d'ailleurs celle de l'exemple montré sur les figures, la forme globale allongée du corps principal 11 de l'éjecteur 10 est cintrée, avantageusement de manière sensiblement symétrique par rapport au plan médian P. Le cintrage du corps 11 facilite l'obtention de l'orientation des normales aux plans respectifs des orifices 13 à 17 selon les angles β1 à β3. En pratique, le contour géométrique de ce cintrage est sans réelle importance tant que les critères angulaires relatifs aux angles β1 à β3 et α sont respectés : ainsi, un arc de cercle, un arc de parabole ou un arc elliptique conviennent.

A titre d'exemple pratique, le corps 11 de l'éjecteur 10 est constitué d'un tuyau dont le diamètre interne est compris entre 100 et 250 mm.

Suivant une option avantageuse, qui est d'ailleurs mise en oeuvre dans l'exemple de réalisation considéré sur les figures, chacun des orifices 13 à 17 est prolongé par un tube 18 en saillie du corps principal 11 de l'éjecteur 10. Chaque tube 18 présente un diamètre interne compris entre 40 et 80 mm et une longueur, c'est-à-dire une dimension saillante par rapport au corps 11, comprise entre 50 et 75 mm, ce diamètre interne et cette longueur étant avantageusement déterminés de façon à ce que la vitesse d'éjection des effluents à travers ces tubes soit également comprise entre 12 et 20 m/s.

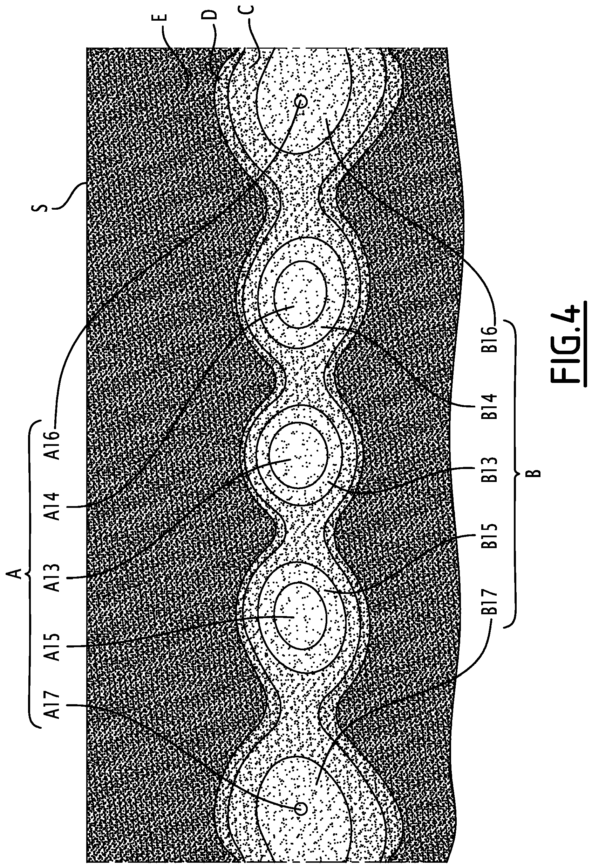

La figure 4 permet d'apprécier le fonctionnement de l'éjecteur 10. Cette figure 4, qui correspond à une section verticale d'eau de mer située à environ 3,5 m en arrière de l'éjecteur, résulte d'une simulation numérique, dans laquelle 1000 m³/h d'effluents ayant un pH de 2,4 sont éjectés par l'éjecteur 10 avec une vitesse comprise entre 15 et 16 m/s pendant que le navire 1 est à l'arrêt. La section d'eau de mer considérée sur cette figure 4 se répartit en cinq régions de pH, à savoir :
- une région A la plus acide, dans laquelle le pH de l'eau est compris entre 6,6 et 6,9 et qui est réparti en cinq zones distinctes, respectivement référencées A13 à A17 ;
- une région B, dans laquelle le pH de l'eau est compris entre 6,9 et 7,2 et qui est réparti en cinq zones distinctes, respectivement référencées B13 à B17 ;
- une région C, dans laquelle le pH de l'eau est compris entre 7,2 et 7,5 ;
- une région D, dans laquelle le pH de l'eau est compris entre 7,5 et 7,8 ; et
- une région E la moins acide, dans laquelle le pH de l'eau est compris entre 7,8 et 8.

Les zones B13 à B17 de la région B sont interposées entre, respectivement, les zones A13 à A17 de la région A et, conjointement, la région C. La région C est, quant à elle, interposée entre les zones B13 à B17 de la région B et la région D, qui est elle-même interposée entre les régions C et E. La région E, qui présente un pH correspondant au pH naturel de l'eau de mer, s'étend depuis la région D à, d'une part, la surface libre S de la mer et, d'autre part, le fond de la mer.

Les jets J13 à J17 produits en sortie de l'éjecteur 10 pointent respectivement vers le centre des zones A13 à A17 de la région A. La figure 4 illustre donc bien le fait que les jets J13 à J17 entraînent les liquides environnants, avec pour effet d'éviter l'accumulation de liquides acides, moyennant un renouvellement d'eau de mer fraîche en permanence bien que le navire soit à l'arrêt. On note également que les jets J13 à J17 n'interfèrent pas directement entre eux, gage aussi d'une bonne efficacité.

## Revendications

1. Installation d'épuration des gaz d'échappement d'un moteur d'un navire marin (1), cette installation comprenant :
- un laveur de désulfuration, auquel sont envoyés les gaz d'échappement et auquel est admis de l'eau de mer, et
- un dispositif (10) d'éjection des effluents liquides du laveur de désulfuration, le dispositif d'éjection comprenant un corps creux (11) alimenté, directement ou indirectement, par les effluents du laveur de désulfuration, lequel corps (11) est percé d'au moins un orifice (13, 14, 15, 16, 17) d'évacuation des effluents, s'étend de part et d'autre d'un plan médian (P) et est adapté pour être porté solidairement par le navire marin (1) de manière que le plan médian (P) soit à la fois vertical et antéropostérieur par rapport au navire,
**caractérisée en ce que** cinq orifices (13, 14, 15, 16, 17) d'évacuation des effluents sont prévus, à savoir :
- un premier orifice (13) dont la normale au plan s'étend sensiblement dans le plan médian (P),
- des deuxième et troisième orifices (14, 15), dont la normale aux plans respectifs s'écarte du plan médian (P) vers l'arrière, en formant, en projection dans un plan horizontal, un angle (β2) par rapport au plan médian qui est compris entre 15° et 25°, et
- des quatrième et cinquième orifices (16, 17), dont la normale aux plans respectifs s'écarte du plan médian (P) vers l'arrière, en formant, en projection dans un plan horizontal, un angle (β3) par rapport au plan médian qui est compris entre 30° et 45°,
la normale aux plans respectifs des premier, deuxième, troisième, quatrième et cinquième orifices étant dirigée en direction du bas vers l'arrière, en formant, en projection dans le plan médian (P), un angle (α) par rapport à l'horizontale qui est compris entre 10° et 25°.

2. Installation suivant la revendication 1, dans laquelle les deuxième et troisième orifices (14, 15) sont symétriques par rapport au plan médian (P), et dans lequel les quatrième et cinquième orifices (16, 17) sont symétriques par rapport au plan médian (P).

3. Installation suivant l'une des revendications 1 ou 2, dans laquelle les premier, deuxième, troisième, quatrième et cinquième orifices (13 à 17) présentent une taille sensiblement identique, adaptée pour que la vitesse d'éjection des effluents au niveau des orifices soit comprise entre 12 et 20 m/s.

4. Installation suivant l'une quelconque des revendications précédentes, dans laquelle les premier, deuxième, troisième, quatrième et cinquième orifices (13 à 17) sont écartés deux à deux d'une distance horizontale (L) comprise entre 400 et 800 mm.

5. Installation suivant l'une quelconque des revendications précédentes, dans laquelle le corps (11) présente une forme globale cintrée, suivant laquelle les premier, deuxième, troisième, quatrième et cinquième orifices (13 à 17) sont répartis.

6. Installation suivant la revendication 5, dans laquelle le corps (11) est cintré de manière sensiblement symétrique par rapport au plan médian (P).

7. Installation suivant l'une quelconque des revendications précédentes, dans laquelle le corps (11) est constitué d'un tuyau dont le diamètre interne est compris entre 100 et 250 mm.

8. Installation suivant l'une quelconque des revendications précédentes, dans laquelle le diamètre interne du corps (11) est supérieur ou égal à 2,5 fois le diamètre des premier, deuxième, troisième, quatrième et cinquième orifices (13 à 17).

9. Installation suivant l'une quelconque des revendications précédentes, dans laquelle chacun des premier, deuxième, troisième, quatrième et cinquième orifices (13 à 17) est prolongé par un tube (18) en saillie du corps (11), qui présente un diamètre interne compris entre 40 et 80 mm et une longueur comprise entre 50 et 75 mm.

## Patentansprüche

1. Abgasreinigungsanlage für einen Motor eines Schiffs (1), wobei die Anlage umfasst:
- einen Entschwefelungswäscher, dem die Abgase zugeführt werden und in den Meerwasser eingeleitet wird, und
- eine Vorrichtung (10) zum Ausstoßen von flüssigen Abwässern des Entschwefelungswäschers, wobei die Ausstoßvorrichtung einen Hohlkörper (11) aufweist, der direkt oder indirekt mit den Abwässern des Entschwefelungswäschers gespeist wird, wobei der Körper (11) mit mindestens einer Öffnung (13, 14, 15, 16, 17) zum Abziehen der Abwässer durchbohrt ist, sich zu beiden Seiten einer Mittelebene (P) erstreckt und dazu eingerichtet ist, fest mit dem Schiff (1) verbunden zu werden, so dass die Mittelebene (P) im Verhältnis zum Schiff gleichzeitig vertikal und von vorne nach hinten verläuft, **dadurch gekennzeichnet, dass** fünf Öffnungen (13, 14, 15, 16, 17) zum Abziehen von Abwässern vorgesehen sind, nämlich:
- eine erste Öffnung (13), deren Normale zur Ebene im wesentlichen in der Mittelebene (P) verläuft,
- zweite und dritte Öffnungen (14, 15), deren Normale zu den jeweiligen Ebenen sich nach hinten von der Mittelebene (P) entfernt und dabei als Projektion in einer horizontalen Ebene einen Winkel (β2) zur Mittelebene im Bereich von 15° bis 25° bildet, und
- vierte und fünfte Öffnungen (16, 17), deren Normale zu den jeweiligen Ebenen sich nach hinten von der Mittelebene (P) entfernt und dabei als Projektion in einer horizontalen Ebene einen Winkel (β3) zur Mittelebene im Bereich von 30° bis 45° bildet, wobei die Normale zu den jeweiligen Ebenen der ersten, zweiten, dritten, vierten und fünften Öffnung von unten nach hinten verläuft und dabei als Projektion in der Mittelebene (P) einen Winkel (α) zur Horizontalen bildet, der im Bereich von 10° bis 25° liegt.

2. Anlage nach Anspruch 1, bei der die zweiten und dritten Öffnungen (14, 15) symmetrisch zur Mittelebene (P) sind, und bei der die vierten und fünften Öffnungen (16, 17) symmetrisch zur Mittelebene (P) sind.

3. Anlage nach einem der Ansprüche 1 oder 2, bei der die erste, zweite, dritte, vierte und fünfte Öffnung (13 bis 17) eine im wesentlichen identische Größe aufweisen, die so vorgesehen ist, dass die Ausstoßgeschwindigkeit der Abwässer auf Höhe der Öffnungen im Bereich von 12 bis 20 m/s liegt.

4. Anlage nach einem der vorhergehenden Ansprüche, bei der die erste, zweite, dritte, vierte und fünfte Öffnung (13 bis 17) jeweils paarweise in einem horizontalen Abstand (L) im Bereich von 400 bis 800 mm zueinander angeordnet sind.

5. Anlage nach einem der vorhergehenden Ansprüche, bei der der Körper (11) eine allgemein gebogene Form aufweist, entlang der die erste, zweite, dritte, vierte und fünfte Öffnung (13 bis 17) verteilt sind.

6. Anlage nach Anspruch 5, bei der der Körper (11) im wesentlichen symmetrisch zur Mittelebene (P) gebogen ist.

7. Anlage nach einem der vorhergehenden Ansprüche, bei der der Körper (11) durch ein Rohr mit einem Innendurchmesser im Bereich von 100 bis 250 mm gebildet ist.

8. Anlage nach einem der vorhergehenden Ansprüche, bei der der Innendurchmesser des Körpers (11) größer oder gleich dem 2,5-fachen des Durchmessers der ersten, zweiten, dritten, vierten und fünften Öffnungen (13 bis 17) ist.

9. Anlage nach einem der vorhergehenden Ansprüche, bei der jede der ersten, zweiten, dritten, vierten und fünften Öffnungen (13 bis 17) durch ein vom Körper (11) vorstehendes Rohr (18) verlängert ist, das einen Innendurchmesser im Bereich von 40 bis 80 mm und eine Länge im Bereich von 50 bis 75 mm aufweist.

## Claims

1. Installation for purifying exhaust gases from an engine of a marine vessel (1), said installation comprising:
- a desulfurisation scrubber to which the exhaust gases are sent and to which seawater is admitted, and
- a device (10) for ejecting liquid effluents from the desulfurisation scrubber, the ejection device comprising a hollow body (11) which is supplied, directly or indirectly, with the effluents from the desulfurisation scrubber, which body (11) is pierced with at least one orifice (13, 14, 15, 16, 17) for evacuation of the effluents, extends on either side of a median plane (P) and is adapted to be carried integrally by the marine vessel (1) so that the median plane (P) is both vertical and anteroposterior relative to the vessel,
**characterised in that** five orifices (13, 14, 15, 16, 17) for evacuation of the effluents are provided, namely:
- a first orifice (13), of which the normal to the plane extends substantially in the median plane (P),
- second and third orifices (14, 15), of which the normal to the respective planes deviates from the median plane (P) towards the rear, forming, in projection in a horizontal plane, an angle (β2) relative to the median plane which is between 15° and 25°, and
- fourth and fifth orifices (16, 17), of which the normal to the respective planes deviates from the median plane (P) towards the rear, forming, in projection in a horizontal plane, an angle (β3) relative to the median plane which is between 30° and 45°,
the normal to the respective planes of the first, second, third, fourth and fifth orifices being directed in the downward direction towards the rear, forming, in projection in the median plane (P), an angle (α) relative to the horizontal which is between 10° and 25°.

2. Installation according to claim 1, wherein the second and third orifices (14, 15) are symmetrical with respect to the median plane (P), and wherein the fourth and fifth orifices (16, 17) are symmetrical with respect to the median plane (P).

3. Installation according to either claim 1 or claim 2, wherein the first, second, third, fourth and fifth orifices (13 to 17) have a size which is substantially identical and is adapted so that the speed of ejection of the effluents at the orifices is between 12 and 20 m/s.

4. Installation according to any one of the preceding claims, wherein the first, second, third, fourth and fifth orifices (13 to 17) are spaced apart in pairs by a horizontal distance (L) of between 400 and 800 mm.

5. Installation according to any one of the preceding claims, wherein the body (11) has a generally curved shape along which the first, second, third, fourth and fifth orifices (13 to 17) are distributed.

6. Installation according to claim 5, wherein the body (11) is curved substantially symmetrically with respect to the median plane (P).

7. Installation according to any one of the preceding claims, wherein the body (11) is constituted by a pipe, the inside diameter of which is between 100 and 250 mm.

8. Installation according to any one of the preceding claims, wherein the inside diameter of the body (11) is greater than or equal to 2.5 times the diameter of the first, second, third, fourth and fifth orifices (13 to 17).

9. Installation according to any one of the preceding claims, wherein each of the first, second, third, fourth and fifth orifices (13 to 17) is extended by a tube (18) projecting from the body (11), which tube has an inside diameter of between 40 and 80 mm and a length of between 50 and 75 mm.
